# EUROPEAN PATENT APPLICATION

(11) **EP 1 903 654 A2**
(43) Date of publication of application: **26.03.2008**
(21) Application number: 07006874.7
(22) Date of filing: 02.04.2007
(51) Int. Cl.: H02J 3/14

(54) **Power line communication apparatus, power feeding system, power feeding control method and computer readable medium**

(30) Priority: 06.10.2006 JP 2006274861; 20.09.2006 JP 2006254986
(71) Applicant: Fuji Xerox Co., Ltd., Minato-ku, Tokyo (JP)
(72) Inventor: Miyata, Masahiko, Ebina-shi Kanagawa (JP)
(74) Representative: Grünecker, Kinkeldey, Stockmair & Schwanhäusser Anwaltssozietät

(57) **Abstract**

A power line communication apparatus includes a power feeding unit, a power information detection unit, a storage unit and a power line communication unit. The power feeding unit feeds power from a power line to an external apparatus. The power information detection unit detects power information regarding the external apparatus fed by the power feeding unit. The storage unit stores information regarding the external apparatus fed by the power feeding unit. The power line communication unit communicates via the power line the power information detected by the power information detection unit and the information stored in the storage unit.

## Description

### BACKGROUND

### 1. Technical Field

The invention relates to a power line communication apparatus, a power feeding system, a power feeding control method and a computer readable medium storing a program.

### 2. Related Art

JP 2002-142385 A discloses helping the entire system to operate stably by managing power consumption of apparatuses connected to a network. JP 2002-142385 A discloses a server apparatus, a network system and a control method thereof in which the network system is controlled so that power consumption does not exceed a predetermined level while checking the power consumption of the entire network system, to thereby realize a stable system operation.

### SUMMARY

The invention provides a power line communication apparatus that makes it possible to monitor the power of apparatus.

According to an aspect of the invention, a power line communication apparatus includes a power feeding unit, a power information detection unit, a storage unit and a power line communication unit. The power feeding unit feeds power from a power line to an external apparatus. The power information detection unit detects power information regarding the external apparatus fed by the power feeding unit. The storage unit stores information regarding the external apparatus fed by the power feeding unit. The power line communication unit communicates via the power line the power information detected by the power information detection unit and the information stored in the storage unit.

Also, the power line communication apparatus may further include a setting unit that sets identification information that is used when the power line communication unit communicates via the power line. The storage unit may store the identification information set by the setting unit.

Also, the setting unit may include a manual setting unit and an automatic setting unit. The manual setting unit allows a user to set the identification information manually. The automatic setting unit automatically sets the identification information based on information, which is acquired by the power line communication unit from another power line communication apparatus. The storage unit may replace the already stored identification information with new identification information set by the automatic setting unit.

Also, the power information detection unit may detect power information regarding the external apparatus at predetermined time intervals and store the detected power information in the storage unit.

Also, the power information detection unit may detect, as the power information, a state of the external apparatus corresponding to the power fed from the power feeding unit.

Also, the power line communication apparatus may further include a switching unit that switches on/off the feeding of the power from the power feeding unit to the external apparatus. The switching unit may switch based on the power information detected by the power information detection unit or information acquired by the power line communication unit from another power line communication apparatus.

Also, the power line communication unit may transmit to another power line communication apparatus an instruction to stop the other power line communication apparatus from feeding power to an external apparatus corresponding to the other power line communication apparatus, based on power information acquired by the power line communication unit from the other power line communication apparatus.

Also, the power line communication apparatus may further include a switching unit that switches on/off the feeding of the power from the power feeding unit to the external apparatus. When the power line communication unit receives from another power line communication apparatus an instruction to stop feeding the power, the switching unit may stop feeding of the power from the power feeding unit to the external apparatus based on the received instruction and the power information regarding the external apparatus detected by the power information detection unit.

According to another aspect of the invention, a power line communication apparatus includes a power feeding unit, a power information detection unit, a first communication unit, a second communication unit and a storage unit. The power feeding unit feeds power from a power line to an external apparatus. The power information detection unit detects power information regarding the external apparatus fed by the power feeding unit. The first communication unit communicates via the power line. The second communication unit communicates with the external apparatus fed by the power feeding unit via a communication medium different from the power line. The storage unit stores information regarding the external apparatus fed by the power feeding unit.

Also, the second communication unit may communicate with the external apparatus to control turning on/off of the external apparatus in accordance with an instruction, received by the first communication unit, from another power line communication apparatus.

Also, the power line communication apparatus may further include a setting unit that sets, as the information regarding the external apparatus stored in the storage unit, information input through the second communication unit.

According to still another aspect of the invention, a power feeding system includes a plurality of power feeding apparatuses connected to power line. The power feeding apparatuses that feed power from the power line to external apparatuses, respectively. Each power feeding apparatus includes a power information detection unit, a storage unit and a power line communication unit. The power information detection unit detects power information regarding the corresponding external apparatus. The storage unit stores information regarding the corresponding external apparatus. The power line communication unit communicates via the power line, which is a communication medium, the power information detected by the power information detection unit and the information stored in the storage unit.

Also, each power feeding apparatus may communicate the power information detected by the power information detection unit to another power feeding apparatus via the power line by means of the power line communication unit of each power feeding apparatus.

Also, each power feeding apparatus may transmit to another power feeding apparatus an instruction to stop the other power feeding apparatus from feeding the power to an external apparatus corresponding to the other power feeding apparatus, based on the power information acquired from the other power feeding apparatuses.

Also, upon receipt of an instruction to stop feeding the power from another power feeding apparatus, each power feeding apparatus may stop feeding the power to the corresponding external apparatus based on the received instruction and the power information, detected by the power information detection unit, regarding the external apparatus fed by each power feeding apparatuses.

Also, each power feeding apparatus may include another communication unit that communicates with the corresponding external apparatus via a communication medium different from the power line. In this case, the external apparatuses, which are fed by different power feeding apparatuses of the plurality of power feeding apparatuses, may be communicable with each other by means of the power line communication units and the other communication units.

According to still another aspect of the invention, a power feeding system includes: a power feeding apparatus connected to a power line; and a power line communication unit that performs power line communication by using the power line as a communication medium. By using the power line communication unit, the power feeding apparatus acquires and stores power information on apparatus fed by another power feeding apparatus connected to the power line and performs a power control on corresponding apparatus so as to control power consumption.

Further, according to still another aspect of the invention, a power feeding system includes: a power feeding apparatus connected to a power line; and a power line communication unit that performs power line communication by using the power line as a communication medium. By using the power line communication unit, the power feeding apparatus acquires and stores power information on apparatus fed by another power feeding apparatus connected to the power line, performs a power control on corresponding apparatus so as to control power consumption, and displays a result of the control on corresponding apparatus.

Furthermore, according to still another aspect of the invention, a computer readable medium stores a program causing a computer provided in a power feeding apparatus for feeding power from a power line to an external device, to execute a process including: detecting power information regarding the external apparatus to which the power is fed; communicating to another power feeding apparatus via the power line, which is a communication medium; and storing information unique to the power feeding apparatus in a storage unit.

Also, the process may further include setting identification information as the information unique to the power feeding apparatus based on information acquired from the other power feeding apparatus by the communicating via the power line.

Also, the process may further include switching on/off the feeding of the power to the external apparatus.

Furthermore, according to still another aspect of the invention, a power feeding control method includes: causing a first power feeding device connected to a power line to acquire power information of a second external device to which a second feeding unit connected to the power lines feeds power, by using a power line communication unit that communicates via the power line; and controlling at least one of a power consumption and an input current of a first external device to which the first power feeding device feeds power, based on the acquired power information of the second external device.

According to claim 1, it becomes possible to perform power monitoring using the power line communication.

According to claim 2, it becomes possible to perform power monitoring using the identification information.

According to claim 3, a setting method corresponding to connected apparatus is enabled.

According to claim 4, it becomes possible to catch the power consumption at predetermined time intervals and to properly perform power management as compared with a case where claim 4 is not adopted.

According to claim 5, it becomes possible to manage the state of the external apparatus based on the power information of the external apparatus.

According to claim 6, it becomes possible to properly control the power of the external apparatus, as compared with the case where claim 6 is not adopted.

According to claim 7, it becomes possible to transmit the instruction to stop feeding the power to the other power feeding apparatus by using the power line communication.

According to claim 8, it becomes possible to receive the instruction to stop feeding the power, from the other power feeding apparatus by using the power line communication.

According to claim 9, power monitoring using the power line communication is enabled. In addition, communication between the power line communication apparatus and the external apparatus to which the power is fed is enabled by the use of the plural communication units.

According to claim 10, it becomes possible to control the power of the other power line communication apparatus by using the power line communication.

According to claim 11, it becomes possible to acquire information regarding the connected external apparatus without a setting unit.

According to claim 12, it becomes possible to monitor the power of the plural external apparatuses by using the power line communication.

According to claim 13, it becomes possible to share power information among different power feeding apparatuses.

According to claim 14, it becomes possible to transmit the instruction to stop feeding power to the other power feeding apparatus by using the power line communication.

According to claim 15, it becomes possible to receive the instruction to stop feeding the power, from another power feeding apparatus by using the power line communication.

According to claim 16, even if an external apparatus to which the power is fed is not compatible with power line communication, communication between the external apparatus and the power feeding apparatus is enabled.

According to claim 17, the communication between external apparatuses fed by different power feeding apparatuses is enabled, and power monitoring therebetween is enabled.

According to claim 18, power monitoring using the power line communication is enabled.

According to claim 19, it becomes possible to set identification information even if a user does not set the identification information.

According to claim 20, it becomes possible to monitor the power of the external apparatus by using the power line communication.

### BRIEF DESCRIPTION OF THE DRAWINGS

Exemplary embodiments of the invention will be described in detail below with reference to the accompanying drawings wherein:
Fig. 1 is a view schematically explaining the configuration of a system using a power line communication apparatus according to a first exemplary embodiment;
Fig. 2A is a view explaining the power line communication apparatus, and Fig. 2B is a view explaining the power line communication apparatus;
Fig. 3 is a block diagram explaining the configuration of a unit section of the power line communication apparatus shown in Figs. 2A and 2B;
Fig. 4 is a block diagram illustrating a storage section of the unit section shown in Fig. 3;
Fig. 5A is a view explaining the power line communication apparatus, and Fig. 5B is a view explaining the power line communication apparatus;
Fig. 6 is a block diagram explaining the configuration of a unit section of the power line communication apparatus shown in Figs. 5A and 5B;
Fig. 7 is a flow chart illustrating process procedures when turning off power by means of the power line communication apparatus;
Fig. 8 is a view to explain setting and storing of unit number;
Fig. 9 is a graph explaining a power-off condition;
Fig. 10 is a view schematically explaining the configuration of a system using a power line communication apparatus according to a modified example of the first exemplary embodiment;
Fig. 11 is a view schematically explaining the configuration of a system using a power line communication apparatus according to a second exemplary embodiment;
Fig. 12A is a view explaining the power line communication apparatus, and Fig. 12B is a view explaining the power line communication apparatus;
Fig. 13 is a block diagram explaining the configuration of a unit section of the power line communication apparatus shown in Figs. 12A and 12B;
Fig. 14A is a view explaining the power line communication apparatus, and Fig. 14B is a view explaining the power line communication apparatus;
Fig. 15 is a block diagram explaining the configuration of a unit section of the power line communication apparatus shown in Figs. 14A and 14B;
Fig. 16 is a graph explaining a relationship between a value of power consumption and a mode;
Fig. 17 is a flow chart illustrating process procedures when turning off power by means of the power line communication apparatus;
Fig. 18 is a flow chart illustrating process procedures when turning off power by means of the power line communication apparatus; and
Fig. 19 is a view schematically explaining the configuration of a system using a power line communication apparatus according to a modified example of the second exemplary embodiment.

### DETAILED DESCRIPTION

Hereinafter, exemplary embodiments of the invention will be described in detail with reference to the accompanying drawings.

### [First exemplary embodiment]

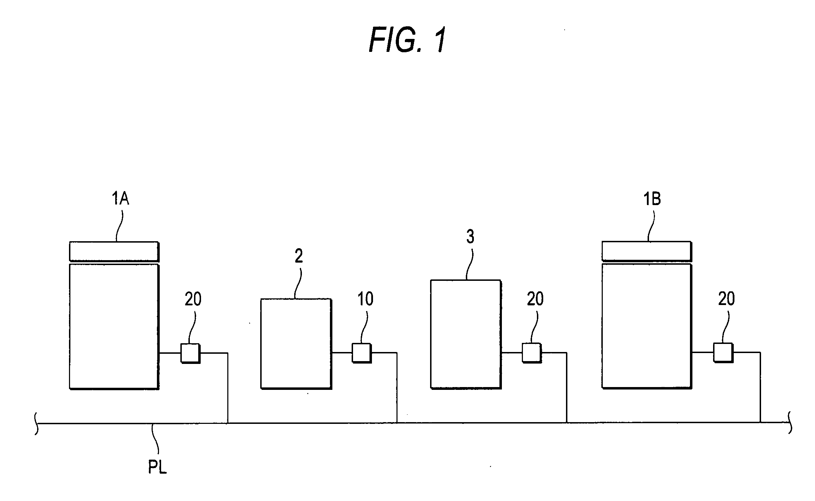

Fig. 1 is a view schematically explaining the configuration of a system (power feeding system) using a power line communication apparatus according to a first exemplary embodiment.

For example, the system shown in Fig. 1 is a system for the entire energy saving management with respect to apparatuses in an office. As shown in Fig. 1, multi-function machines 1A and 1B, a personal computer 2, and a shredder 3 which are power consuming apparatuses are connected to a power line PL, which is wired from a power company to an office, through power line communication apparatuses (power feeding apparatuses) 10 and 20. That is, power flowing through the power line PL is supplied to the multi-function machines 1A and 1B, the personal computer 2, and the shredder 3 through the power line communication apparatuses 10 and 20. In other words, the multi-function machines 1A and 1B, the personal computer 2, and the shredder 3 are connected to each other through the power line communication apparatuses 10 and 20 and power line PL.

The personal computer 2 is mounted with the power line communication apparatus 10. In addition, the multi-function machines 1A and 1B and the shredder 3 are mounted with the power line communication apparatus 20. These power line communication apparatuses 10 and 20 have a basic configuration in common but have different parts, which will be described later.

Here, the multi-function machines 1A and 1B are image apparatuses having functions of scanner, printer, facsimile, copier, and the like. The multi-function machines 1A and 1B operates by the power supplied through the power line PL. The personal computer 2 is installed with various kinds of application software and is supplied with power from the power line PL so as to execute various kinds of application processing. The shredder 3 is an apparatus that shreds paper to be disposed of by the power supplied through the power line PL.

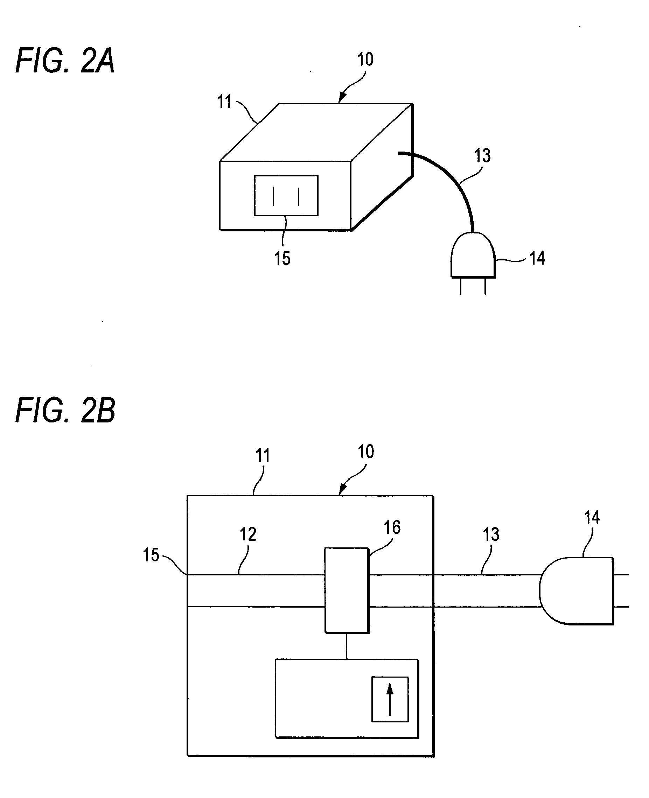

Figs. 2A and 2B are views explaining the power line communication apparatus 10. Specifically, Fig. 2A is a perspective view illustrating the external appearance of the power line communication apparatus 10, and Fig. 2B is a view illustrating the configuration of the power line communication apparatus 10.

As shown in Figs. 2A and 2B, the power line communication apparatus 10 includes a main apparatus body 11, a power supply line 12 (refer to Fig. 2B) provided inside the main apparatus body 11, and a power cord 13 that is connected to the power supply line 12 and extends from the main apparatus body 11 to the outside. Further, the power line communication apparatus 10 includes a power plug (commercial power input unit; inlet) 14, which is provided at a front end of the power cord 13 and is connected to an outlet (not shown) on the power line PL (refer to Fig. 1), and an outlet (output unit) 15 that is provided on an external surface of the main apparatus body 11 and outputs power from the power supply line 12 to various kinds of apparatuses (apparatuses whose power consumption is to be monitored). In addition, the power supply line 12, the power cord 13, the power plug 14, and the outlet 15 may form a power feeding unit.

Moreover, the power line communication apparatus 10 includes a unit section 16 (refer to Fig. 2B) provided between the power cord 13 and the outlet 15. The unit section 16 may serve as a power line communication unit, a power information detection unit, or the like. That is, the unit section 16 serving as the power line communication unit transmits / receives power line superimposition signals to / from other power line communication apparatuses, which are connected by the power line PL (refer to Fig. 1), through the power line PL. In addition, the unit section 16 serving as the power information detection unit detects consumption of the power input from the power line PL through the power cord 13. Thus, the power line communication apparatus 10 may be what is obtained by adding various kinds of intelligent functions to a table tap.

In this exemplary embodiment, "power consumption" is used as the power information. However, the power information in the invention is not limited thereto. The power information may include information regarding power, for example, an "input current" to an external device.

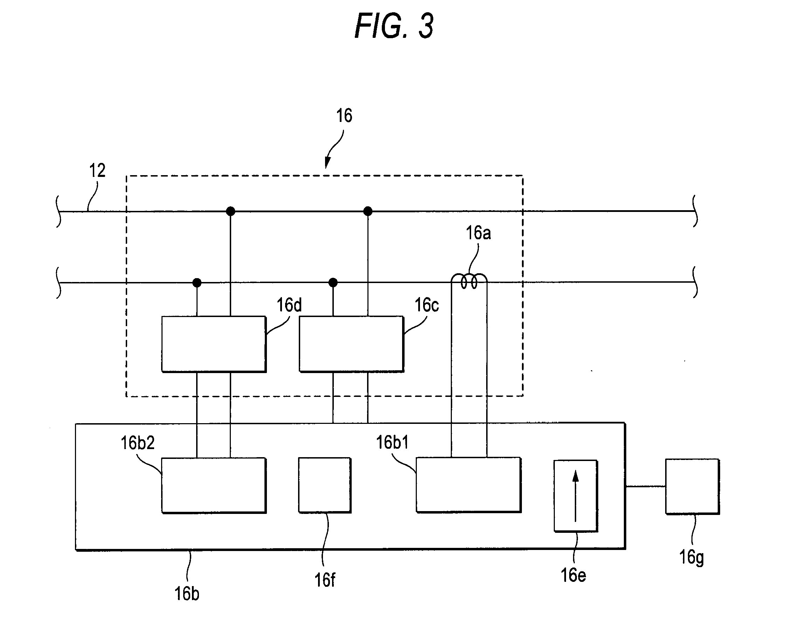

Fig. 3 is a block diagram explaining the configuration of the unit section 16.

As shown in Fig. 3, the unit section 16 includes a clamp coil 16a for detecting a current flowing through the power supply line 12 and a control unit (CPU) 16b that makes a control based on a result of the detection of the clamp coil 16a and controls power line communication.

More specifically, the control section 16b includes a power detection functioning section 16b1 and a power line communication functioning section 16b2. The power detection functioning section 16b1 detects a power value by performing a predetermined operation after receiving the detection result of the clamp coil 16a. In addition, the power line communication functioning section 16b2 transmits and receives predetermined signals through the power supply line 12 according to predetermined procedures.

Further, the unit section 16 includes a DC power section 16c that converts an AC current, which flows through the power supply line 12, into a DC current and supplies the DC current to the control section 16b and a power line communication filter 16d that cuts off signals other than signals to be transmitted and received between the power supply line 12 and the control section 16b.

Furthermore, the unit section 16 includes a number setting section (setting unit) 16e that sets unit number of the unit section 16, a number of the main apparatus body 11, and an identification number to an unique ID number (hereinafter, referred to as 'unit number'). Further, the unit section 16 includes an automatic setting section 16f that sets automatically sets a unit number. Furthermore, the unit section 16 includes a storage section 16g serving as a non-volatile memory (NVM) that stores the unit number set by the number setting section 16e and the automatic setting section 16f. Accordingly, for example, it is possible to manually set the unit number beforehand by means of the number setting section 16e at the time of shipment and store the manually set unit number in the storage section 16g and then to automatically change the unit number, which is manually set, by means of the automatic setting section 16f and store the automatically set unit number in the storage section 16g when the unit section 16 is connected to the power line PL.

In addition, even though the number setting section 16e and the automatic setting section 16f are provided in this exemplary embodiment, only one of the number setting section 16e and the automatic setting section 16f may be provided.

Also, the storage section 16g is used to store, for example, a type of an external device and kinds of modes that the external device can take, as information regarding the external device to which each power line communication apparatus 10 feeds power. Here, the type of the external device may be a type such as a "multifunction device" or a "personal computer." Also, the modes of the external device may be an operation state of the external device such as an operation mode, a standby mode and a power-off mode.

In addition, the storage section 16g serving as the non-volatile memory has functions of data rewriting and data holding after power off. For example, a flash memory or an EEPROM (electronically erasable and programmable read only memory) may be used as the storage section 16g.

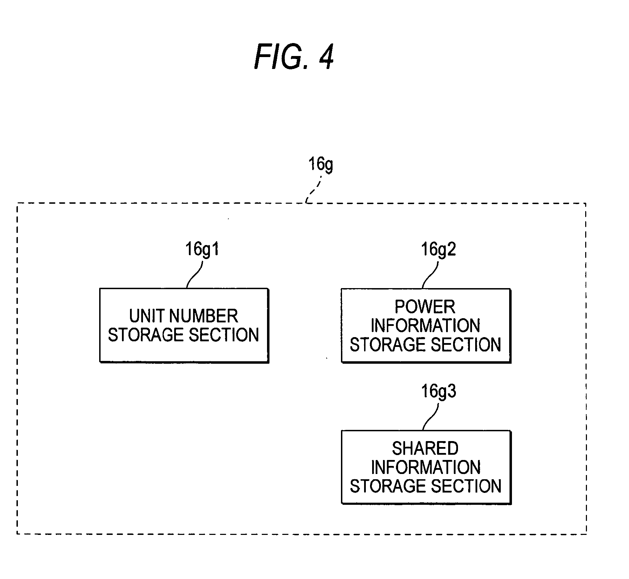

Fig. 4 is a block diagram illustrating the storage section 16g.

As shown in Fig. 4, the storage section 16g includes a unit number storage section 16g1 that stores the unit number set by the number setting section 16e (refer to Fig. 3) and the automatic setting section 16f (refer to Fig. 3). Further, the storage section 16g includes a power information storage section 16g2 that stores various kinds of power information regarding power control. Furthermore, the storage section 16g includes a shared information storage section 16g3 that stores information shared among different power line communication apparatuses 10 and 20 by means of the power line communication functioning section 16b2 (refer to Fig. 3).

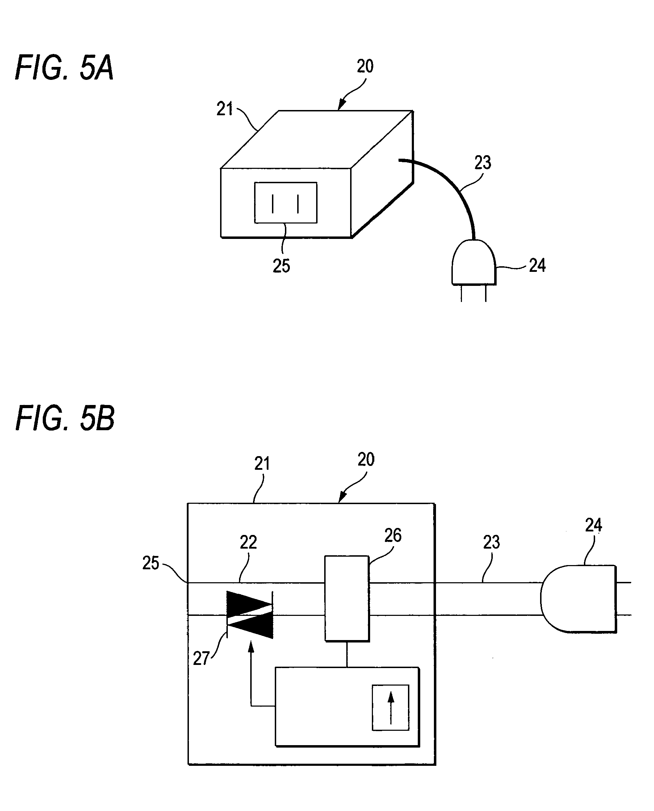

Figs. 5A and 5B are views explaining the power line communication apparatus 20. Specifically, Fig. 5A is a perspective view illustrating the external appearance of the power line communication apparatus 20, and Fig. 5B is a view illustrating the configuration of the power line communication apparatus 20. The basic configuration of the power line communication apparatus 20 shown in Figs. 5A and 5B are equivalent to that of the power line communication apparatus 10 shown in Figs. 2A and 2B. That is, the power line communication apparatus 20 includes a main apparatus body 21, a power supply line 22 (refer to Fig. 5B), a power cord 23, a power plug 24, and an outlet 25. The main apparatus body 21, the power supply line 22, the power cord 23, the power plug 24, and the outlet 25 may respectively have the same configuration as the main apparatus body 11, the power supply line 12, the power cord 13, the power plug 14, and the outlet 15 in the power line communication apparatus 10.

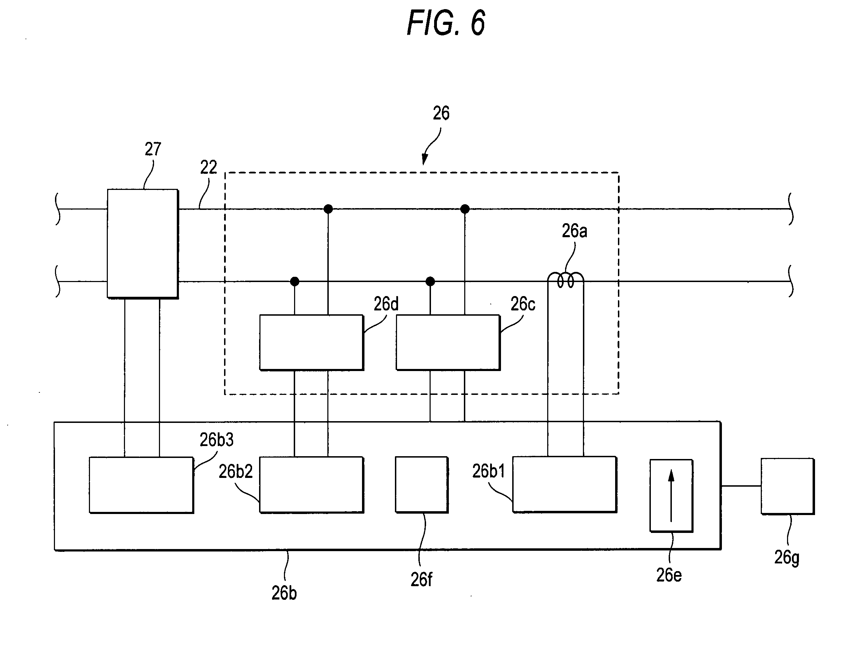

In addition, the power line communication apparatus 20 includes a unit section 26 (refer to Fig. 5B). The configuration of the unit section 26 will be described later. In addition, the power line communication apparatus 20 includes a power switching section (switching unit) 27 provided on the power supply line 22 of the main apparatus body 21. The power switching section 27 is disposed on the power supply line 22 between the unit section 26 and the outlet 25. The power switching section 27 is connected to a control section 26b (refer to Fig. 6), such that the control section 26b controls turning ON/OFF of the power switching section 27. That is, when the power switching section 27 switches to OFF by the control section 26b, supply of power to an apparatus connected to the outlet 25 is cut off.

Specifically, the power switching section 27 is disposed on a downstream side of the unit section 26 in the power flowing direction, so that power can be supplied to the unit section 26 even when the power supply is cut off by the power switching section 27. In other words, it is not necessary to make power supplied to dedicated server apparatus for energy saving management or dedicated apparatus having a power monitoring function, but it is sufficient to make power supplied to only a power communication functioning apparatus of apparatus whose power is to be monitored.

Fig. 6 is a block diagram explaining the configuration of the unit section 26.

The basic configuration of the unit section 26 shown in Fig. 6 is equivalent that of the unit section 16 shown in Fig. 3. That is, the unit section 26 includes a clamp coil 26a, a DC power section 26c, a filter 26d, a number setting section 26e, an automatic setting section 26f, and a storage section 26g. The clamp coil 26a, the DC power section 26c, the filter 26d, the number setting section 26e, the automatic setting section 26f, and the storage section 26g may respectively have the same configuration as the clamp coil 16a, the DC power section 16c, the filter 16d, the number setting section 16e, the automatic setting section 16f, and the storage section 16g in the unit section 16.

Further, the unit section 26 includes a control section 26b having a power detection functioning section 26b1, a power line communication functioning section 26b2, and a power-off functioning section 26b3. The power-off functioning section 26b3 serves to cut off supply of power according to an instruction of the power detection functioning section 26b1 or the power line communication functioning section 26b2.

The storage section 26g is used to store a condition to cut off power fed to the external device while storing information that is similar to the information stored in the storage section 16g. The condition to cut off the power may include a condition associated with a mode of the external device to which the power line communication appratus 20 feeds power and/or a condition associated with a mode of another power line communication appartus.

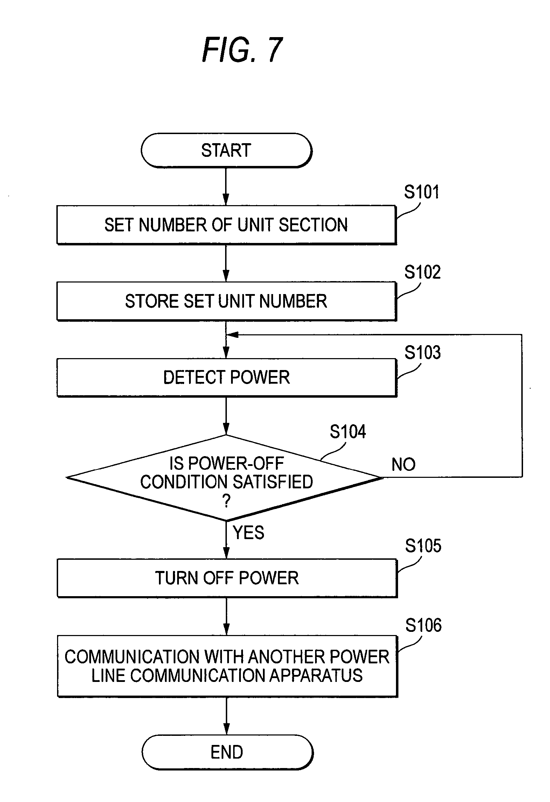

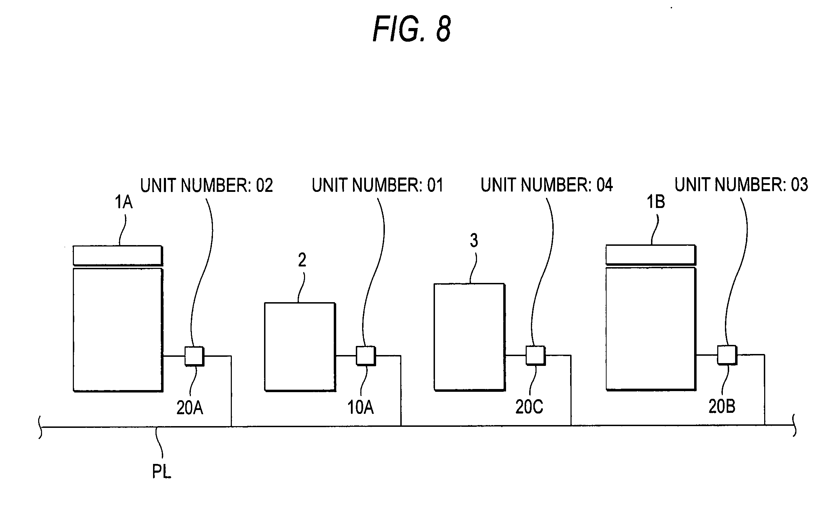

Fig. 7 is a flow chart illustrating process procedures when turning off power using the power line communication apparatus 20. Fig. 8 is a view explaining setting and storing of unit numbers.

In the process procedures shown in Fig. 7, first, the number setting section 16e (refer to Fig. 3) sets a unit number of the power line communication apparatus 10 (refer to Fig. 1), and the number setting section 26e (refer to Fig. 6) sets a unit number of the power line communication apparatus 20 (refer to Fig. 1) (step S101). Then, the set unit numbers are stored in the storage sections 16g and 26g (refer to Figs. 3 and 6) by the control sections 16b and 26b (refer to Figs. 3 and 6), respectively (step S102).

An example will be specifically described with reference to Fig. 8. Assuming that a unit number of a power line communication apparatus 10A connected to the personal computer 2 is set to '01' by the number setting section 16e (refer to Fig. 3), the unit number '01' is stored in the storage section 16g of the power line communication apparatus 10A by the control section 16b. In addition, assuming that a unit number of a power line communication apparatus 20A connected to the multi-function machine 1A is set to '02' by the number setting section 26e (refer to Fig. 6), the unit number '02' is stored in a storage section 26f of the power line communication apparatus 20A by the control section 26b. In addition, assuming that a unit number of a power line communication apparatus 20B connected to the multi-function machine 1B is set to '03' by the number setting section 26e, the unit number '03' is stored in the storage section 26g of the power line communication apparatus 20A by the control section 26b. In addition, assuming that a unit number of a power line communication apparatus 20C connected to the shredder 3 is set to 04' by the number setting section 26e, the unit number ' 04 ' is stored in the storage section 26g of the power line communication apparatus 20C by the control section 26b.

After the step S102, in the power line communication apparatuses 10A, 20A, 20B, and 20C, the power detection functioning units 16b1 and 26b1 (refer to Figs. 3 and 6) perform power detection (step S103). Then, in the power line communication apparatuses 20A, 20B, and 20C having the power-off functioning section 26b3, each power detection functioning section 26b1 determines whether or not a power-off condition is satisfied (step S104). This condition will be described later.

If the power detection functioning section 26b1 determines that the power-off condition is not satisfied, the process returns to the step S103 to continue the power detection. On the other hand, if the power detection functioning section 26b1 determines that the power-off condition is satisfied, the power detection functioning section 26bl outputs a power-off instruction to the power-off functioning section 26b3. The power-off functioning section 26b3 that receives the instruction causes the power switching section 27 (refer to Fig. 6) to operate in order to cut off power (step S105). The power line communication apparatus 20A, 20B, or 20C whose power is cut off notifies the other power line communication apparatus 10A, 20A, 20B, or 20C that the power has been cut off by using the power line communication functioning section 26b2 (step S103), and thus a series of processes are completed.

For example, even if a power switch of an apparatus is not switched, the power is cut off according to the procedures described above. That is, even in the case when all kinds of apparatus are not used, for example, at night or holidays when power consumption increases by integration according to time, both power monitoring and energy saving can be realized. In addition, a power distribution work for a new local area network is not needed even when establishing power line communication, and thus the power line communication can be easily built. In addition, in order to increase the number of power line communication apparatuses, it is sufficient to separately add a power line communication apparatus. Accordingly, the invention is effective for introduction of a system and extendability. In addition, since the power line communication is built separately from a local area network for image information data, information security is easily realized.

Moreover, for example, in the case when a personal computer is used as a server, the personal computer may consume extra power since a load of CPU that operates all the time is large and useless functions are included. However, in the case of using a power monitoring server, power for the power monitoring server cannot be neglected.

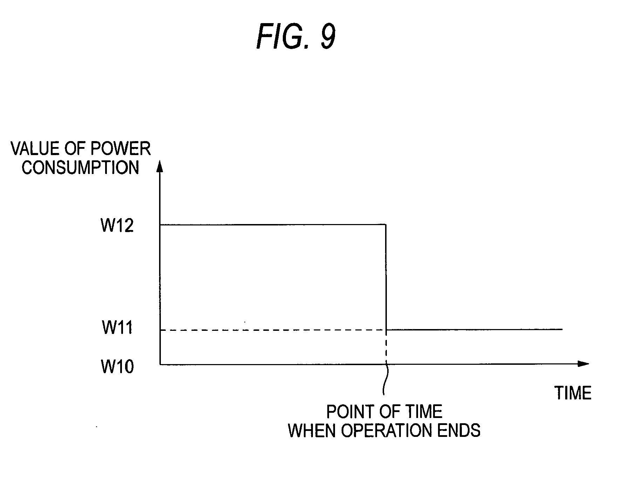

Fig. 9 is a graph explaining a power-off condition, where a vertical axis indicates a value of power consumption detected by the power detection functioning section 26bl and a horizontal value indicates time.

The power-off condition in the step S104 includes lowering of power consumption of the multi-function machine 1A or 1B or the shredder 3 shown in Fig. 8. For example, in the power detection with respect to the multi-function machine 1A in Fig. 8 performed by the power detection functioning section 26bl (refer to Fig. 6) of the power line communication apparatus 20A, if a value of power consumption has been a predetermined value of power consumption W12 until a predetermined point of time and then lowers to a value of power consumption W11 (W11 < W12) after the predetermined point of time as shown in Fig. 9, it is determined that a job of the multi-function machine 1A has been completed. Therefore, when the power-off instruction is output from an office system, it is possible to prevent power from being cut off while a job is executed and to cut off power at a point of time when the job is completed. In addition, even though the case of the multi-function machine 1A has been described in the example, the same is true for a case of the shredder 3.

As described above, in addition to setting a power-off condition due to monitoring of power consumption, it may be possible to set, as a condition, a state in which the personal computer 2 is powered off. Specifically, when the power detection functioning section 16bl (refer to Fig. 3) of the power line communication apparatus 10A of the personal computer 2 detects that power consumption has lowered, it can be determined that the personal computer 2 has been powered off. Accordingly, the power line communication functioning section 16b2 (refer to Fig. 3) of the power line communication apparatus 10A notifies the other power line communication apparatuses 20A, 20B, and 20C that the personal computer 2 has been powered off. Then, when all personal computers (not shown) in the office are powered off, the power line communication apparatuses 20B and 20C determine that the power-off condition is satisfied, and thus the power is cut off. As a result, the multi-function machine 1B and the shredder 3 are powered off. In addition, for example, it may be considered that only the power line communication apparatus 20A holds a power-on state by setting a power-off condition. This is to make it possible that the multi-function machine 1A connected to the power line communication apparatus 20A receives facsimile at night.

Alternatively, it may be possible to detect power information at predetermined time intervals, acquire data by continuously performing the detection for a predetermined period of time and store them in the storage sections 16g and 26g, and set a power-off condition on the basis of the acquired data. For example, it may be possible to detect variation of power consumption from 8:00 a.m. to 10:00 p.m. and to continuously perform the detection for a week so as to see a pattern of power consumption. In order to perform the detection, the power line communication apparatuses 10 and 20 are configured to have a timer function.

On the other hand, as a power-on condition, when a personal computer in an office, for example, the personal computer 2 is powered on, it is notified to the other power line communication apparatuses 20A, 20B, and 20C that the personal computer 2 has been powered on. Then, the power line communication apparatuses 20B and 20C that have been powered off are powered on by themselves. In addition, the apparatus may be set to be powered on at a predetermined time. Alternatively, a switch (not shown) for power-off resetting may be provided in the power line communication apparatus so that a user powers on the power line communication apparatus.

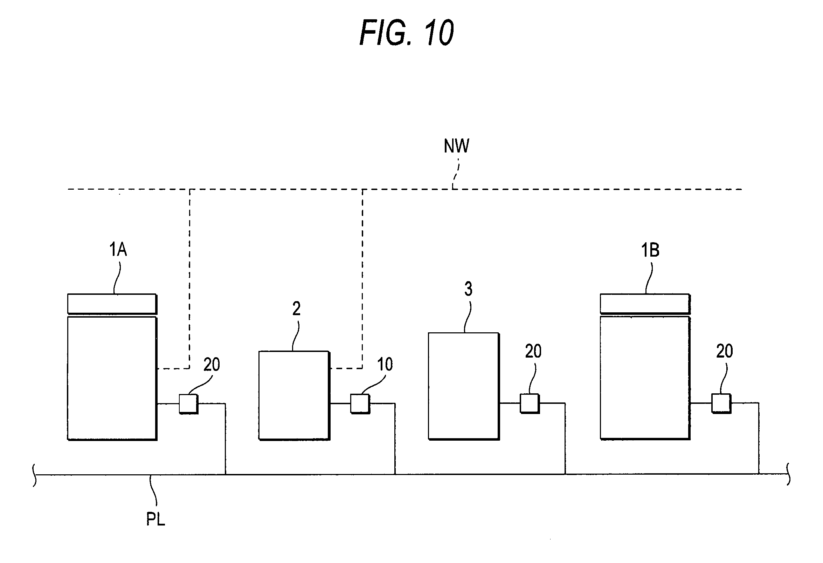

Hereinafter, an application of this exemplary embodiment will be described with reference to Fig. 10.

Fig. 10 is a view schematically explaining the configuration of a system using a power line communication apparatus according to an application of the first exemplary embodiment.

As shown in Fig. 10, the multi-function machine 1A and the personal computer 2 are connected to an existing network NW. Thus, even when the multi-function machine 1A is used as a network printer of the personal computer 2, this exemplary embodiment may be applied.

### [Second exemplary embodiment]

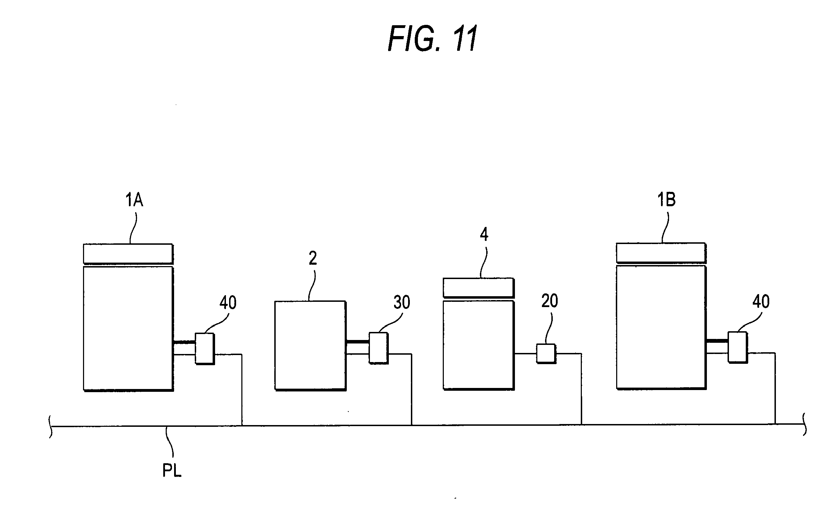

Fig. 11 is a view schematically explaining the configuration of a system using a power line communication apparatus according to a second exemplary embodiment.

The basic configuration shown in Fig. 11 is the same as that shown in Fig. 1 according to the first exemplary embodiment. That is, power flowing through a power line PL is supplied to multi-function machines 1A and 1B, a personal computer 2, and a copying machine 4. In addition, a power line communication apparatus 40 is provided between the multi-function machine 1A and the power line PL, and a power line communication apparatus 40 is provided between the multi-function machine 1B and the power line PL. In addition, a power line communication apparatus 30 is provided between the personal computer 2 and the power line PL. In addition, a power line communication apparatus 20 is provided between the copying machine 4 and the power line PL. In addition, the copying machine 4 is an analog single-function copying machine which does not have a network function.

Further, each power line communication apparatus 40 is connected to each of the multi-function machines 1A and 1B through a general-purpose communication line (heavy line in the drawing), in addition to being connected to the power feeding line. Similarly, each of the power line communication apparatus 30 and the personal computer 2 is also connected to the general-purpose communication line (heavy line in the drawing), in addition to being connected to the power feeding line. The general-purpose communication line will be described later. Specifically, it can be considered that the multi-function machines 1A and 1B and the personal computer 2 are indirectly connected to each other through the general-purpose communication line and the power feeding line. That is, the multi-function machines 1A and 1B and the personal computer 2 can communicate to each other through the general-purpose communication line and the power feeding line.

Here, the configuration of the power line communication apparatus 20 will not be described because the configuration of the power line communication apparatus 20 is the same as that used in the first exemplary embodiment.

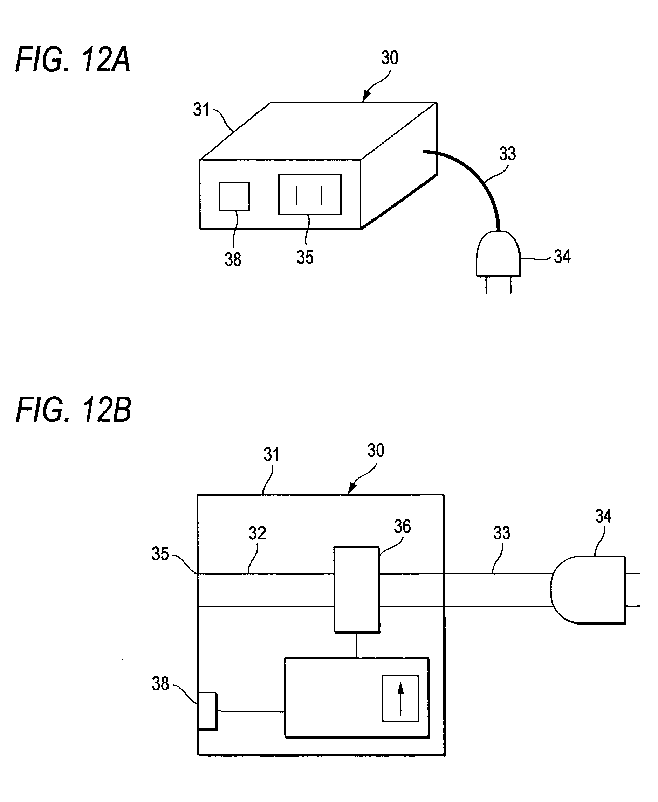

Figs. 12A and 12B are views explaining the power line communication apparatus 30. Specifically, Fig. 12A is a perspective view illustrating the external appearance of the power line communication apparatus 30, and Fig. 12B is a view illustrating the configuration of the power line communication apparatus 30.

The basic configuration of the power line communication apparatus 30 shown in Figs. 12A and 12B are equivalent to that of the power line communication apparatus 10 shown in Figs. 2A and 2B. That is, the power line communication apparatus 30 includes a main apparatus body 31, a power supply line 32 (refer to Fig. 12B), a power cord 33, a power plug 34, and an outlet 35. The main apparatus body 31, the power supply line 32, the power cord 33, the power plug 34, and the outlet 35 may respectively have the same configuration as the main apparatus body 11, the power supply line 12, the power cord 13, the power plug 14, and the outlet 15 in the power line communication apparatus 10.

In addition, the power line communication apparatus 30 includes a unit section 36 (refer to Fig. 12B). The configuration of the unit section 36 will be described later. In addition, the power line communication apparatus 30 includes an external interface (second communication unit; separate communication unit) 38 provided on an external surface of the of the main apparatus body 31. For example, a USB (universal serial bus) interface or a LAN (local area network) interface may be used as the external interface 38. Thus, the power line communication apparatus 30 can transmit and receive various kinds of information through the external interface 38.

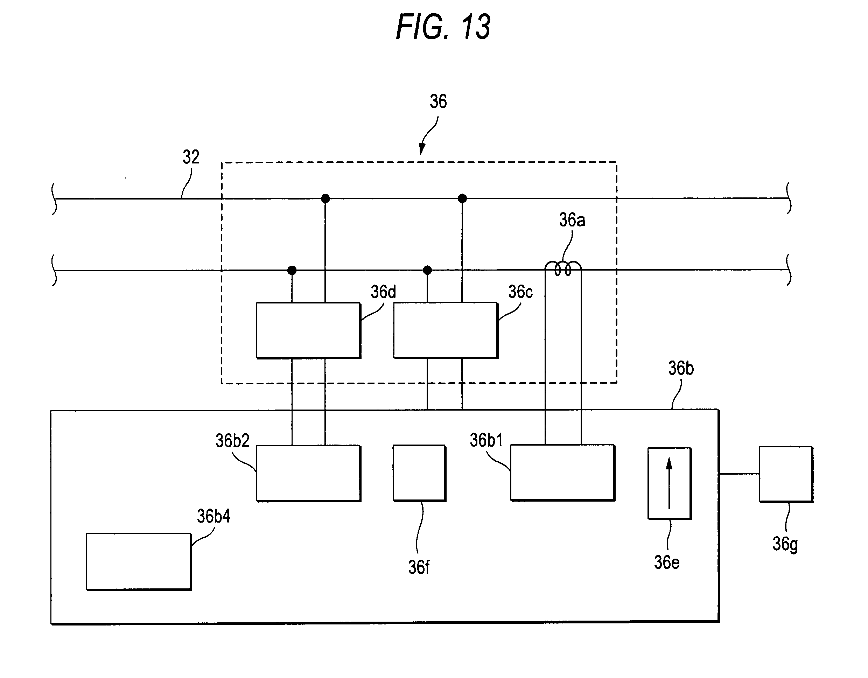

Fig. 13 is a block diagram explaining the configuration of the unit section 36.

The basic configuration of the unit section 36 shown in Fig. 13 is the same as that of the unit section 16 shown in Fig. 3. That is, the unit section 36 includes a clamp coil 36a, a DC power section 36c, a filter 36d, a number setting section 36e, an automatic setting section 36f, and a storage section 36g. The clamp coil 36a, the DC power section 36c, the filter 36d, the number setting section 36e, the automatic setting section 36f, and the storage section 36g may respectively have the same configuration as the clamp coil 16a, the DC power section 16c, the filter 16d, the number setting section 16e, the automatic setting section 16f, and the storage section 16g in the unit section 16.

Moreover, the unit section 36 includes a control section 36b having a power detection functioning section 36b1, a power line communication functioning section 36b2, and a general-purpose communication functioning section 36b4. The general-purpose communication functioning section 36b4 serves to transmit and receive predetermined signals between the general-purpose communication functioning section 36b4 and apparatus connected to the external interface 38 in accordance with predetermined protocol.

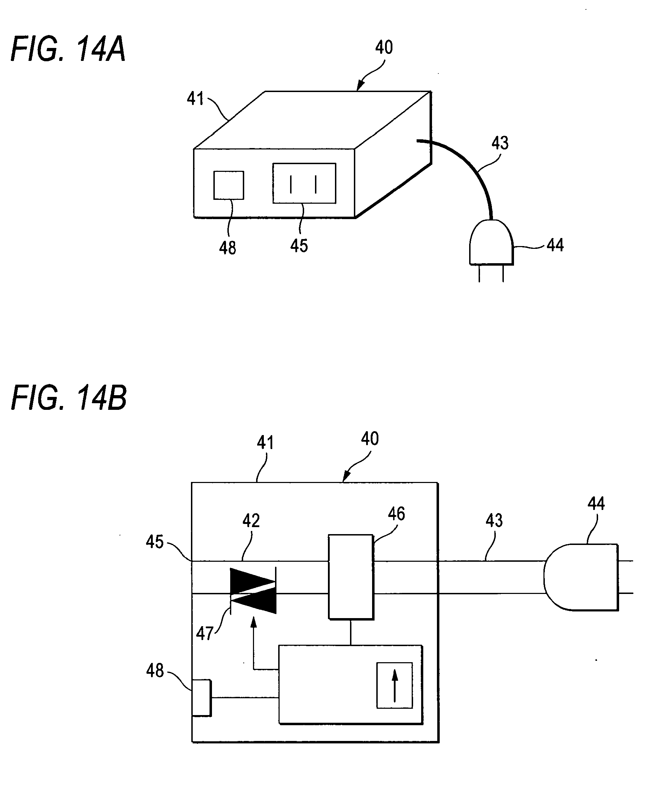

Figs. 14A and 14B are views explaining the power line communication apparatus 40. Specifically, Fig. 14A is a perspective view illustrating the external appearance of the power line communication apparatus 40, and Fig. 14B is a view illustrating the configuration of the power line communication apparatus 40. The basic configuration of the power line communication apparatus 40 shown in Figs. 14A and 14B are equivalent to that of the power line communication apparatus 10 shown in Figs. 2A and 2B. That is, the power line communication apparatus 40 includes a main apparatus body 41, a power supply line 42 (refer to Fig. 14B), a power cord 43, a power plug 44, and an outlet 45. The main apparatus body 41, the power supply line 42, the power cord 43, the power plug 44, and the outlet 45 may respectively have the same configuration as the main apparatus body 11, the power supply line 12, the power cord 13, the power plug 14, and the outlet 15 in the power line communication apparatus 10.

In addition, the power line communication apparatus 401 includes a unit section 46 (refer to Fig. 14B).
The configuration of the unit section 46 will be described later. In addition, the power line communication apparatus 40 includes a power switching section (switching unit) 47 provided on the power supply line 42 of the main apparatus body 41. The power switching section 47 is positioned on the power supply line 42 between the unit section 46 and the outlet 45. The power switching section 47 may have the same configuration as the power switching section 27 shown in Fig. 5B.

In addition, the power line communication apparatus 40 includes an external interface 48 provided on an external surface of the main apparatus body 41. The external interface 48 may have the same configuration as the external interface 38 shown in Figs. 12A and 12B.

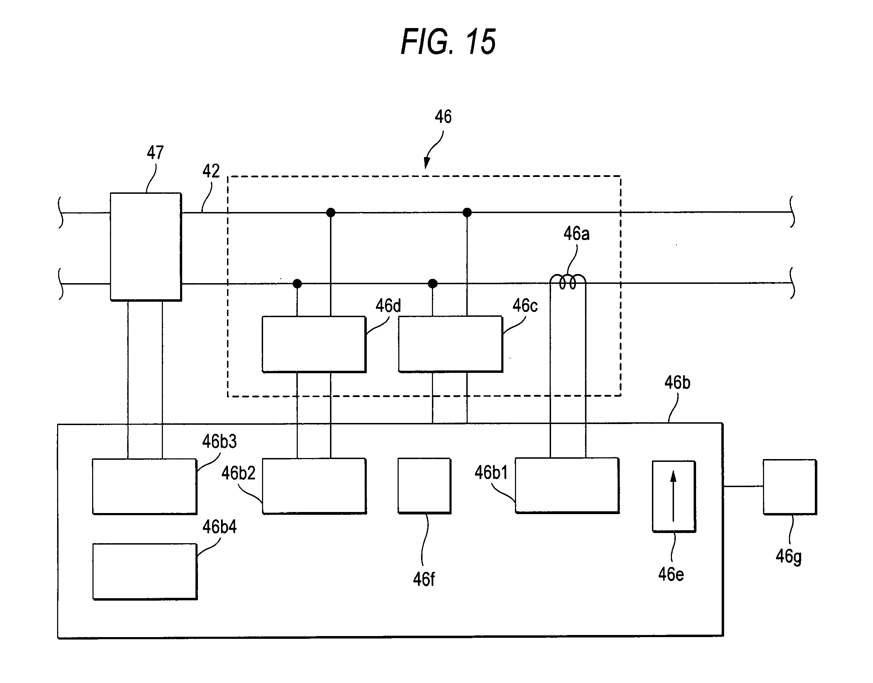

Fig. 15 is a block diagram explaining the configuration of the unit section 46.

The basic configuration of the unit section 46 shown in Fig. 15 is equivalent to that of the unit section 16 shown in Fig. 3. That is, the unit section 46 includes a clamp coil 46a, a DC power section 46c, a filter 46d, a number setting section 46e, an automatic setting section 46f, and a storage section 46g. The clamp coil 46a, the DC power section 46c, the filter 46d, the number setting section 46e, the automatic setting section 46f, and the storage section 46g may respectively have the same configuration as the clamp coil 16a, the DC power section 16c, the filter 16d, the number setting section 16e, the automatic setting section 16f, and the storage section 16g in the unit section 16.

Moreover, the unit section 46 includes a control section 46b having a power detection functioning section 46b1, a power line communication functioning section 46b2, a power-off functioning section 46b3, and a general-purpose communication functioning section 46b4. The power-off functioning section 46b3 may have the same configuration as the power-off functioning section 26b3 shown in Fig. 6. In addition, the general-purpose communication functioning section 46b4 may have the same configuration as the general-purpose communication functioning section 36b4 shown in Fig. 13.

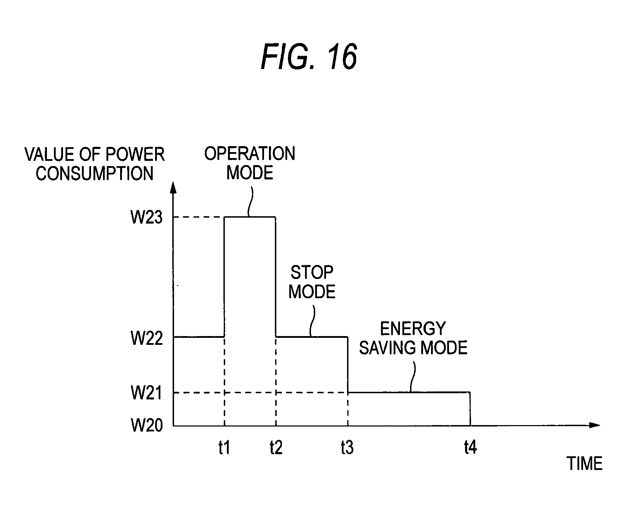

Fig. 16 is a graph explaining the relationship between a value of power consumption and a mode, where a vertical axis indicates a value of power consumption detected by the power detection functioning section 46b1 (refer to Fig. 15) and a horizontal value indicates time.

As shown in Fig. 16, the multi-function machine 1A (refer to Fig. 10) has three modes (states) of an operation mode (operation state), a stop mode (standby state), and an energy saving mode (energy saving state), for example. Here, the energy saving mode refers to a mode being on standby with low power consumption in the standby state of the multi-function machine 1A.

In addition, it is assumed that a value of power consumption in the operation mode is W23, a value of power consumption in the stop mode is W22, and a value of power consumption in the energy saving mode is W21. Here, W23 > W22 > W21. In addition, a value of power consumption when turning off power is assumed to be W20. Here, W21 > W20.

In this case, if a value of power consumption of the multi-function machine 1A is detected by the power detection functioning section 46b1, it is possible to determine in which mode (state) the multi-function machine 1A currently is. In other words, by acquiring values of power consumption corresponding to the respective modes beforehand, it is possible to switch to a mode corresponding to a value of power consumption detected by the power detection functioning section 46b1.

Specifically, if the power detection functioning section 46b1 detects that a value of power consumption of the multi-function machine 1A is W23 during a period of time from t1 to t2, it is possible to acquire information that the multi-function machine 1A is in the operation mode during the period of time from t1 to t2. Further, if the power detection functioning section 46b1 detects that a value of power consumption of the multi-function machine 1A is W22 during a period of time from t2 to t3, it is possible to acquire information that the multi-function machine 1A is in the stop mode during the period of time from t2 to t3. Furthermore, if it is detected that a value of power consumption of the multi-function machine 1A is W21 during a period of time from t3 to t4, it is possible to acquire information that the multi-function machine 1A is in the energy saving mode during the period of time from t3 to t4. In addition, if it is detected that a value of power consumption of the multi-function machine 1A subsequent to t4 is W20, it is possible to acquire information that the multi-function machine 1A is in the power-off state.

The mode information on the multi-function machine 1A acquired as described above is stored in the storage section 46g (refer to Fig. 15) or transmitted to the other power line communication apparatuses 20, 30, and 40 by means of the power line communication functioning section 46b2 (refer to Fig. 15). Thus, the reason why management based on the mode information on the multi-function machine 1A not the value of power consumption of the multi-function machine 1A is adopted is to make subsequent processes going on smoothly.

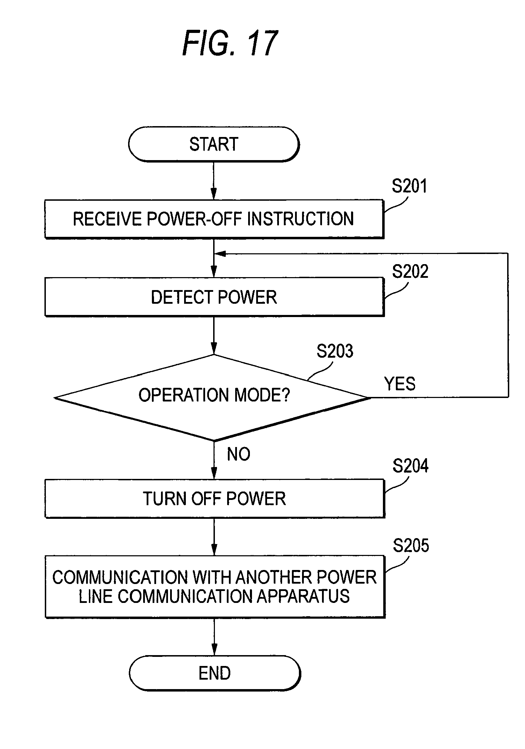

Fig. 17 is a flow chart illustrating process procedures when turning off power using the power line communication apparatus 20.

Hereinafter, a power-off instruction shown in Fig. 17 will be described. As an example, if an integrated value obtained as a communication result of plural power line communication apparatuses exceeds a target value of power consumption in a system that is determined beforehand, a power-off instruction is transmitted. Specifically, in this case, the power-off instruction is transmitted to a part of the plural power line communication apparatuses having lower priorities on the basis of power-off priorities determined beforehand, the target value being exceeded due to the part of the power line communication apparatuses. In addition, as a release condition of turning off power (start of power feed), in the case described above, it may be considered that when the target value is not exceeded even if the power OFF is released at a point of time when an integrated value is less than the target value, a process of releasing the power OFF is performed in the order of high priorities contrary to the case of the power-off instruction.

When the power line communication functioning section 26b2 (refer to Fig. 6) receives the power-off instruction from another power line communication apparatus 30 (refer to Fig. 11) (step S201), the power detection functioning section 26b1 (refer to Fig. 6) detects the power consumption of the copying machine 4 (step S202). As a result of the detection, a value of power consumption changes to a mode, as described above referring to Fig. 16. Then, it is determined whether or not the copying machine 4 is in an operation mode (step S203). If it is determined that the copying machine 4 is in the operation mode, the process returns to the step S202 to perform the detection again. If it is determined that the copying machine 4 is not in the operation mode, for example, when the copying machine 4 is in the stop mode or the energy saving mode, the power-off functioning section 26b3 (refer to Fig. 6) causes the power switching section 27 (refer to Fig. 6) to operate so as to turn off power (step S204). Then, the power line communication functioning section 26b2 notifies the power line communication apparatus 30 that power has been turned off (step S205), and thus a series of processes are completed.

Thus, if power is turned off by an operation of the power switching section 27, the copying machine 4 does not consume power any more. Even if the copying machine 4 has the energy saving mode, the copying machine 4 is not almost used at night, for example. In the case in which the copying machine 4 is not powered off even though the copying machine 4 is not used, the copying machine 4 switches to the energy saving mode to reduce the power consumption. However, even in the energy saving mode, power is consumed a little. Accordingly, when the copying machine 4 is not used for a long period of time, for example, at night, it is important to power off image apparatus for energy saving.

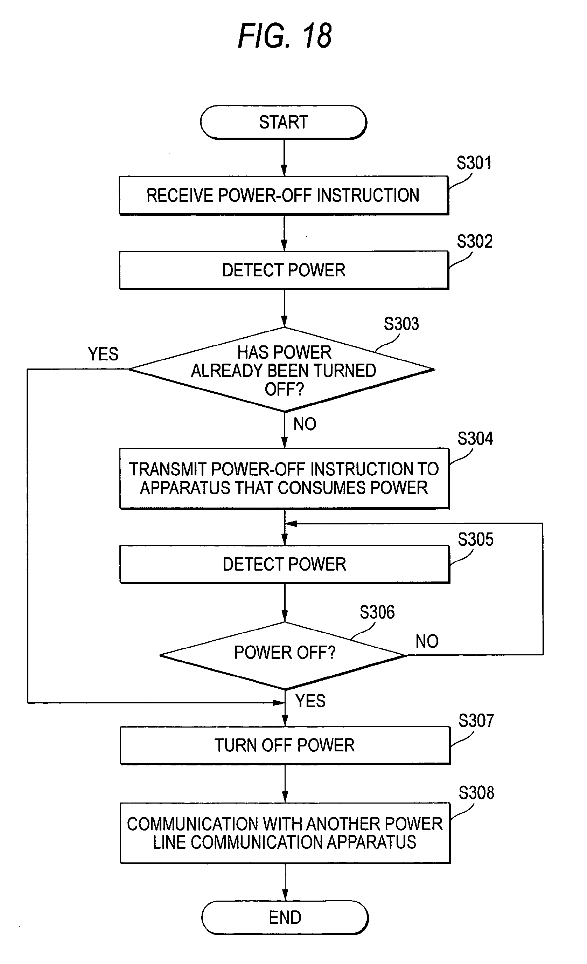

Fig. 18 is a flow chart illustrating process procedures when turning off power using the power line communication apparatus 40. Here, the power-off instruction shown in Fig. 18 is the same as the case shown in Fig. 17, and thus the explanation thereof will be omitted.

As shown in Fig. 18, when the power line communication functioning section 46b2 (refer to Fig. 15) receives a power-off instruction from another power line communication apparatus 30 (refer to Fig. 11) (step S301), the power detection functioning section 46b1 (refer to Fig. 15) detects the power consumption of the multi-function machine 1A (refer to Fig. 11) (step S302). Then, it is determined whether or not the power consumption is zero, that is, whether or not the multi-function machine 1A has been powered off (step S303). If it is determined that the multi-function machine 1A is not powered off, the general-purpose communication functioning section 46b4 (refer to Fig. 15) transmits the power-off instruction to the multi-function machine 1A, which is power-consuming apparatus, through the external interface 48 (refer to Figs. 14A and 14B) (step S304). Then, the power detection functioning section 46bl (refer to Fig. 15) detects power consumption of the multi-function machine 1A (step S305) and then determines whether or not the multi-function machine 1A is powered off (step S306).

Here, in the case when the multi-function machine 1A (refer to Fig. 11) receives the power-off instruction transmitted in the step S304, if a print instruction (job) is being executed, the multi-function machine 1A is not immediately powered off and waits until the print instruction is completed. That is, after the print instruction is completed, the multi-function machine 1A performs power-off processing by itself, and thus the multi-function machine 1A is powered off.

On the other hand, if it is determined that the multi-function machine 1A is not powered off in the step S306, the process returns to the step S305 in which the power line communication apparatus 40 continues the power detection. If it is determined that the multi-function machine 1A has been powered off, the power-off functioning section 46b3 (refer to Fig. 15) causes the power switching section 47 (refer to Fig. 14B) to operate so as to turn off power (step S307). Then, the power line communication functioning section 46b2 notifies the power line communication apparatus 30 that the power has been turned off (step S308), and thus a series of processes are completed.

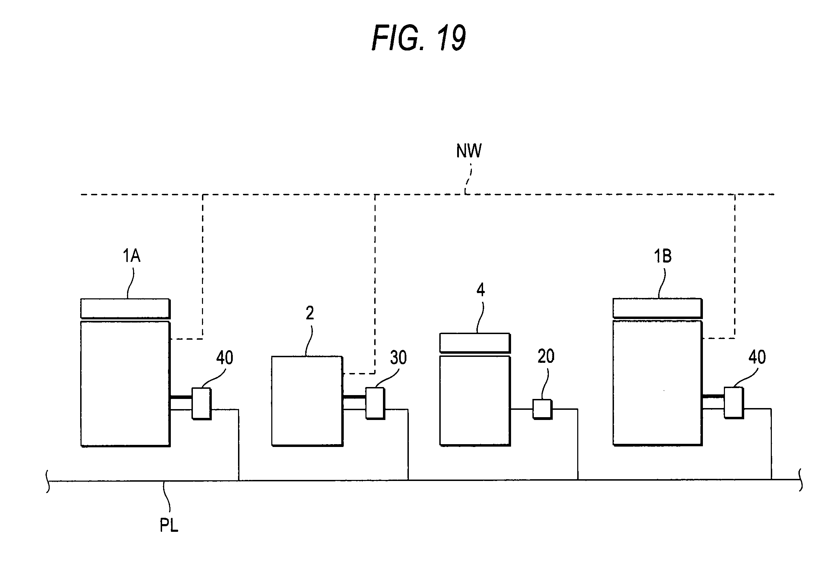

Hereinafter, an application of this exemplary embodiment will be described with reference to Fig. 19.

Fig. 19 is a view schematically explaining the configuration of a system using a power line communication apparatus according to an application of the second exemplary embodiment. Details described above refer to Fig. 10 will be omitted.

As shown in Fig. 19, the multi-function machines 1A and 1B and the personal computer 2 are connected to the existing network NW. Accordingly, the multi-function machines 1A and 1B may transmit various kinds of energy saving information to the personal computer 2 through the network NW. The personal computer 2 holds various kinds of energy saving information that is received. In addition, the personal computer 2 may cause various kinds of received energy saving information to be displayed on a screen.

As described above, the invention adopts the configuration for providing power management and control system of the entire office. In addition, the above-described configuration may be applied for energy saving and power saving management.

Further, various kinds of processes described in the embodiments are realized by application programs executed in the control sections 16b, 26b, 36b, and 46b, by using the storage sections 16g, 26g, 36g, and 46g that are working memories. The application programs may be installed in the power line communication apparatuses 10, 20, 30, and 40 when the power line communication apparatuses 10, 20, 30, and 40 are supplied to customers (including users). Alternatively, programs for execution of the power line communication apparatuses 10, 20, 30, and 40 may be supplied in the form of, for example, a storage medium readable by the power line communication apparatuses 10, 20, 30, and 40. For example, a CD-ROM medium corresponds to the storage medium, and the programs are read by a CD-ROM reader (not shown) to be executed. Alternatively, the programs may be supplied through the power ine PL by means of a program transmission apparatus (not shown), for example. Alternatively, in the power line communication apparatuses 30 and 40, the programs may be supplied through the external interfaces 38 and 48, respectively.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A power line communication apparatus comprising:
a power feeding unit that feeds power from a power line to an external apparatus;
a power information detection unit that detects power information regarding the external apparatus fed by the power feeding unit;
a storage unit that stores information regarding the external apparatus fed by the power feeding unit; and
a power line communication unit that communicates via the power line the power information detected by the power information detection unit and the information stored in the storage unit.

2. The apparatus according to claim 1, further comprising:
a setting unit that sets identification information that is used when the power line communication unit communicates via the power line, wherein:
the storage unit stores the identification information set by the setting unit.

3. The apparatus according to claim 2, wherein:
the setting unit comprises:
a manual setting unit that allows a user to set the identification information manually; and
an automatic setting unit that automatically sets the identification information based on information, which is acquired by the power line communication unit from another power line communication apparatus, and
the storage unit replaces the already stored identification information with new identification information set by the automatic setting unit.

4. The apparatus according to any one of claims 1 to 3, wherein the power information detection unit detects power information regarding the external apparatus at predetermined time intervals and stores the detected power information in the storage unit.

5. The apparatus according to any one of claims 1 to 3, wherein:
the power information detection unit detects, as the power information, a state of the external apparatus corresponding to the power fed from the power feeding unit.

6. The apparatus according to any one of claim 1 to 3, further comprising:
a switching unit that switches on/off the feeding of the power from the power feeding unit to the external apparatus, wherein:
the switching unit switches based on the power information detected by the power information detection unit or information acquired by the power line communication unit from another power line communication apparatus.

7. The apparatus according to any one of claims 1 to 3, wherein the power line communication unit transmits to another power line communication apparatus an instruction to stop the other power line communication apparatus from feeding power to an external apparatus corresponding to the other power line communication apparatus, based on power information acquired by the power line communication unit from the other power line communication apparatus.

8. The apparatus according to any one of claims 1 to 3, further comprising:
a switching unit that switches on/off the feeding of the power from the power feeding unit to the external apparatus, wherein:
when the power line communication unit receives from another power line communication apparatus an instruction to stop feeding the power, the switching unit stops feeding of the power from the power feeding unit to the external apparatus based on the received instruction and the power information regarding the external apparatus detected by the power information detection unit.

9. A power line communication apparatus comprising:
a power feeding unit that feeds power from a power line to an external apparatus;
a power information detection unit that detects power information regarding the external apparatus fed by the power feeding unit;
a first communication unit that communicates via the power line;
a second communication unit that communicates with the external apparatus fed by the power feeding unit via a communication medium different from the power line; and
a storage unit that stores information regarding the external apparatus fed by the power feeding unit.

10. The apparatus according to claim 9, wherein the second communication unit communicates with the external apparatus to control turning on/off of the external apparatus in accordance with an instruction, received by the first communication unit, from another power line communication apparatus.

11. The apparatus according to claim 9, further comprising:
a setting unit that sets, as the information regarding the external apparatus stored in the storage unit, information input through the second communication unit.

12. A power feeding system comprising:
a plurality of power feeding apparatuses connected to power line, wherein:
the power feeding apparatuses that feed power from the power line to external apparatuses, respectively, and
each power feeding apparatus comprises:
a power information detection unit that detects power information regarding the corresponding external apparatus;
a storage unit that stores information regarding the corresponding external apparatus; and
a power line communication unit that communicates via the power line, which is a communication medium, the power information detected by the power information detection unit and the information stored in the storage unit.

13. The according to claim 12, wherein each power feeding apparatus communicates the power information detected by the power information detection unit to another power feeding apparatus via the power line by means of the power line communication unit of each power feeding apparatus.

14. The according to claim 13, wherein each power feeding apparatus transmits to another power feeding apparatus an instruction to stop the other power feeding apparatus from feeding the power to an external apparatus corresponding to the other power feeding apparatus, based on the power information acquired from the other power feeding apparatuses.

15. The system according to claim 13 wherein upon receipt of an instruction to stop feeding the power from another power feeding apparatus, each power feeding apparatus stops feeding the power to the corresponding external apparatus based on the received instruction and the power information, detected by the power information detection unit, regarding the external apparatus fed by each power feeding apparatuses.

16. The system according to claim 12, wherein each power feeding apparatus comprises another communication unit that communicates with the corresponding external apparatus via a communication medium different from the power line.

17. The system according to claim 16, wherein the external apparatuses, which are fed by different power feeding apparatuses of the plurality of power feeding apparatuses, are communicable with each other by means of the power line communication units and the other communication units.

18. A computer readable medium storing a program causing a computer provided in a power feeding apparatus for feeding power from a power line to an external device, to execute a process comprising:
detecting power information regarding the external apparatus to which the power is fed;
communicating to another power feeding apparatus via the power line, which is a communication medium; and
storing information unique to the power feeding apparatus in a storage unit.

19. The computer readable medium according to claim 18, wherein the process further comprising:
setting identification information as the information unique to the power feeding apparatus based on information acquired from the other power feeding apparatus by the communicating via the power line.

20. The computer readable medium program according to claim 18, wherein the process further comprises:
switching on/off the feeding of the power to the external apparatus.

21. A power feeding control method comprising:
causing a first power feeding device connected to a power line to acquire power information of a second external device to which a second feeding unit connected to the power lines feeds power, by using a power line communication unit that communicates via the power line; and
controlling at least one of a power consumption and an input current of a first external device to which the first power feeding device feeds power, based on the acquired power information of the second external device.
